# EUROPÄISCHE PATENTANMELDUNG

(11) **EP 4 439 944 A1**
(43) Veröffentlichungstag der Anmeldung: **02.10.2024**
(21) Anmeldenummer: 23186721.9
(22) Anmeldetag: 20.07.2023
(51) Int. Cl.: H02K 15/03

(54) **BLECHPAKET-WERKSTÜCKTRÄGER SOWIE VERWENDUNGEN DESSELBEN IN EINER HARZVERSIEGELUNGSVORRICHTUNG UND EINEM HARZVERSIEGELUNGSVERFAHREN**

(30) Priorität: 02.03.2023 DE 102023000787
(71) Anmelder: Grob-Werke GmbH & Co. KG, 87719 Mindelheim (DE)
(72) Erfinder: Klausner, Michael, 86807 Buchloe (DE); Wenzl, Christopher, 86856 Hiltenfingen (DE)
(74) Vertreter: KASTEL Patentanwälte PartG mbB

(57) **Zusammenfassung**

Zur Verfahrensvereinfachung und Erhöhen der Prozesssicherheit eines im Zuge der Herstellung eines Rotors einer elektrischen Maschine durchzuführenden Harzversiegelungsverfahrens schafft die Erfindung einen Blechpaket-Werkstückträger (24) zum Halten wenigstens eines mit einer Rotorwellenöffnung (20) versehenen Blechpakets (14) eines Rotorkerns (16) bei einer Harzversiegelung, bei dem Permanentmagnete (12) an oder in dem wenigstens einen Blechpaket (14) mittels eines Harzes versiegelt werden, wobei der Blechpaket-Werkstückträger (24) eine Aufnahmeplatte (42) und mehrere sich von der Aufnahmeplatte (42) erstreckende stiftförmige Führungselemente (44, 46) aufweist, die zum Positionieren des wenigstens einen Blechpakets (14) in einer radialen Richtung durch Angreifen an in Umfangsrichtung versetzten Stellen an dem Innendurchmesser und/oder dem Außendurchmesser des wenigstens einen Blechpakets (14) ausgebildet sind.

## Beschreibung

Die Erfindung betrifft einen Blechpaket-Werkstückträger zum Halten wenigstens eines mit einer Rotorwellenöffnung versehenen Blechpakets eines Rotorkerns bei einer Harzversiegelung. Weiter betrifft die Erfindung eine Blechpaket-Werkstückträger-Anordnung, umfassend einen derartigen Blechpaket-Werkstückträger und wenigstens ein darin zu haltendes Blechpaket. Weiter betrifft die Erfindung eine Verwendung eines Blechpaket-Werkstückträgers bei einer Harzversiegelung. Weiter betrifft die Erfindung eine Harzversiegelungsvorrichtung zum Harzversiegeln eines Rotorkerns und eine eine solche aufweisende Rotorherstellanlage. Schließlich betrifft die Erfindung ein im Zuge einer Herstellung eines Rotors einer elektrischen Maschine durchzuführendes Harzversiegelungsverfahren zum Versiegeln von Permanentmagneten in oder an wenigstens einem Blechpaket eines Rotorkerns sowie ein Computerprogramm mit Anweisungen zu dessen Durchführung.

Insbesondere liegt die Erfindung auf dem Gebiet der industriellen Großserienfertigung von Rotoren für elektrische Maschinen, wie z.B. Elektromotoren, vorzugsweise Elektromotoren für die Elektromobilität, die insbesondere als Antrieb in elektromotorischen Kraftfahrzeugen, wie PKW oder LKW einzusetzen sind.

Bevorzugte Ausgestaltungen der Erfindung werden bei einem Prozess der Magnetfixierung in Rotorblechpaketen mittels EMC (Epoxy Molding Compound, "resin") und im Speziellen bei einem Handling und Ausrichten von Einzelblechpaketen (substacks) beim Molding ohne Rotorwelle verwendet.

Eine zentrale Herausforderung beim Molding ohne Rotorwelle stellt die "lose" Positionierung und Ausrichtung der Einzelblechpakete in der Moldingpresse dar - insbesondere, wenn die Einzelblechpakete zueinander verschränkt sind, also insbesondere einen Winkelversatz um die Rotorwellenbohrungsachse aufweisen. Die Positionierung muss so ausgeführt sein, dass das EMC beim Moldingvorgang durch alle Einzelblechpakete von der Angussseite bis zur Entlüftungsseite fließen kann und so eine gleichmäßige, prozesssichere Fixierung der Magnete in allen Einzelblechpaketen ("substack") des gesamten Blechpaketstapels ("stack") gegeben ist.

Zum Stand der Technik wird auf die EP 2 421 127 B1 verwiesen, die eine Harzversiegelungsvorrichtung zur Fixierung von Magneten in einem Blechpaket eines Rotorkerns mittels Harzversiegelung offenbart, welche eine Presse mit einem ersten und einem zweiten Formwerkzeug, die mittels eines Aktors zum Verpressen wenigstens eines darin aufgenommenen Blechpakets mit Magneten aufeinander zu und voneinander weg bewegbar sind, und eine Harzzuführeinrichtung zum Zuführen und Einpressen des Harzes in Zwischenräume zwischen Presse, Blechpaket und Magneten aufweist. Die bekannte Harzversiegelungsvorrichtung nutzt einen Werkstückträger, auf dem die Einzelblechpakete über einen zentrischen, in der Rotorwellenbohrung verlaufenden Dorn hinsichtlich der Position orientiert sind. Mithilfe des Werkstückträgers erfolgt die Be- und Entladung der Moldingpresse mit dem Werkstück.

Die Erfindung hat sich zur Aufgabe gestellt, ein hinsichtlich geringerem Prozessaufwand und verbesserter Prozessqualität verbessertes Handling von Blechpaketen bei einer Harzversiegelung im Zuge einer Serienproduktion von Rotoren elektrischer Maschinen zu ermöglichen.

Zum Lösen dieser Aufgabe schafft die Erfindung einen Blechpaket-Werkstückträger nach Anspruch 1. Eine Anordnung, eine Verwendung, eine Harzversiegelungsvorrichtung und ein Harzversiegelungsverfahren, bei denen der Blechpaket-Werkstückträger verwendet wird, sind in den Nebenansprüchen angegeben.

Vorteilhafte Ausgestaltungen sind Gegenstand der Unteransprüche.

Die Erfindung schafft gemäß einem Aspekt davon einen Blechpaket-Werkstückträger zum Halten wenigstens eines mit einer Rotorwellenöffnung versehenen Blechpakets eines Rotorkerns bei einer Harzversiegelung, bei dem Permanentmagnete an oder in dem wenigstens einen Blechpaket mittels eines Harzes versiegelt werden, wobei der Blechpaket-Werkstückträger eine Aufnahmeplatte und mehrere sich von der Aufnahmeplatte erstreckende stiftförmige Führungselemente aufweist, die zum Positionieren des wenigstens einen Blechpakets in einer radialen Richtung durch Angreifen an in Umfangsrichtung versetzten Stellen an dem Innendurchmesser und/oder dem Außendurchmesser des wenigstens einen Blechpakets ausgebildet sind.

Es ist bevorzugt, dass die stiftförmigen Führungselemente wenigstens drei stiftförmige Führungselemente umfassen.

Es ist bevorzugt, dass die stiftförmigen Führungselemente oder einige der stiftförmigen Führungselemente als Außen-Führungselemente zum Angreifen an in Umfangsrichtung versetzten Stellen an dem Außendurchmesser des wenigstens einen Blechpakets ausgebildet sind.

Es ist bevorzugt, dass die oder einige der stiftförmigen Führungselemente als Innen-Führungselemente zum Angreifen an in Umfangsrichtung versetzten Stellen an dem Innendurchmesser des wenigstens einen Blechpakets vorgesehen sind.

Es ist bevorzugt, dass die stiftförmigen Führungselemente gleichmäßig um ein Zentrum einer Auflagefläche der Aufnahmeplatte verteilt vorgesehen sind.

Es ist bevorzugt, dass die stiftförmigen Führungselemente eine konvexe, kreisförmige oder ovale Außenkontur für einen linienförmigen Kontakt mit dem Innendurchmesser oder dem Außendurchmesser des wenigstens einen Blechpakets aufweisen.

Bevorzugte Ausgestaltungen des Blechpaket-Werkstückträger weisen eine Ausrichteinrichtung zum Positionieren des wenigstens einen Blechpakets in einer Umfangsrichtung durch formschlüssigen Eingriff mit dem wenigstens einen Blechpaket auf.

Es ist bevorzugt, dass die Ausrichteinrichtung wenigstens ein Eingriffselement aus der Gruppe aufweist, die eine Feder an einem der stiftförmigen Führungselemente zum Bilden einer Nut-Feder-Verbindung durch Eingreifen in eine Nut an dem wenigstens einen Blechpaket, eine Nut an einem der stiftförmigen Führungselemente zum Bilden einer Nut-Feder-Verbindung zusammen mit einer Feder an dem wenigstens einen Blechpaket, eine Ausnehmung an der Aufnahmeplatte zur Aufnahme eines an dem Blechpaket vorgesehenen Indexstifts und einen Indexstift, der von der Aufnahmeplatte zum Eingreifen in eine sich axial erstreckende Ausnehmung an dem Blechpaket vorsteht, umfasst.

Bei einigen Ausführungsformen ist der Blechpaket-Werkstückträger ausgebildet als Werkstückträger zum Aufnehmen eines Blechpakets für ein Single-Stack-Molding.

Bei einigen Ausführungsformen ist der Blechpaket-Werkstückträger ausgebildet als Werkstückträger zum Aufnehmen mehrerer gestapelter Blechpakete für ein Multi-Stack-Molding. Dabei können die Blechpakete verschränkt sein oder nicht verschränkt sein.

Einige Ausführungsformen des Blechpaket-Werkstückträgers weisen eine Einstelleinrichtung zum Einstellen der Position der Führungselemente zwecks Anpassung an unterschiedlich dimensionierte Blechpakete auf.

Vorzugsweise weist die Einstelleinrichtung mehrere Befestigungseinheiten an der Aufnahmeplatte zur wahlweisen Befestigung der stiftförmigen Führungselemente an vorbestimmten Positionen auf.

Vorzugsweise hat die Einstelleinrichtung mehrere Befestigungslöcher in der Aufnahmeplatte zum wahlweisen Einsetzen der stiftförmigen Führungselemente.

Vorzugsweise hat die Einstelleinrichtung einen zu einem Zentrum des jeweiligen Führungselements versetzten Befestigungsvorsprung zum Befestigen des Führungselements durch Einsetzen in eine Befestigungsöffnung in der Aufnahmeplatte.

Eine bevorzugte Ausgestaltung des Blechpaket-Werkstückträgers hat eine Anlagen-Komponenten-Schnittstelle an der Unterseite der Aufnahmeplatte mit wenigstens einer Aufnahme zur positionsgenauen Übergabe des Blechpaket-Werkstückträgers an Anlagen-Komponenten einer Rotorherstellanlage.

Eine bevorzugte Ausgestaltung des Blechpaket-Werkstückträgers hat eine Transporteinheit-Schnittstelle an der Seite des Werkstückträgers mit wenigstens einer Aufnahme zum positionsgenauen form- und/oder kraftschlüssigen Erfassen des Werkstückträgers durch eine Transporteinheit einer Rotorherstellanlage.

Eine bevorzugte Ausgestaltung des Blechpaket-Werkstückträgers hat eine maschinenlesbare Codierung zur Identifikation des Werkstückträgers und/oder des darin aufzunehmenden Blechpaket-Werkstücks.

Eine bevorzugte Ausgestaltung des Blechpaket-Werkstückträgers hat wenigstens einen Entlüftungskanal an der Oberseite der Auflageplatte zur Entlüftung von Magnetaufnahmekavitäten des wenigstens einen Blechpakets bei der Harzversiegelung.

Gemäß einem weiteren Aspekt schafft die Erfindung eine Blechpaket-Werkstückträger-Anordnung, umfassend einen Blechpaket-Werkstückträger nach einer der voranstehenden Ausgestaltungen und wenigstens ein darin zu haltendes Blechpaket für einen Rotorkern, wobei das wenigstens eine Blechpaket Magnetaufnahmekavitäten zur Aufnahme von Permanentmagneten und eine Rotorwellenöffnung zur Aufnahme einer Rotorwelle aufweist.

Gemäß einem weiteren Aspekt der Erfindung wird die Verwendung eines Blechpaket-Werkstückträgers nach einer der voranstehenden Ausgestaltungen bei der Harzversiegelung vorgeschlagen, bei der Permanentmagnete an oder in dem wenigstens einen durch den Blechpaket-Werkstückträger gehaltenen Blechpaket mittels des Harzes versiegelt werden.

Gemäß einem weiteren Aspekt schafft die Erfindung eine Harzversiegelungsvorrichtung zum Harzversiegeln eines Rotorkerns, um Permanentmagnete an oder in wenigstens einem Blechpaket des Rotorkerns mittels Harz zu versiegeln, umfassend
wenigstens einen Blechpaket-Werkstückträger nach einer der voranstehenden Ausgestaltungen,
eine Presse, in der der Blechpaket-Werkstückträger mit wenigstens einen darin gehaltenen Blechpaket mit Permanentmagneten aufnehmbar ist, und
eine Harzzuführeinrichtung zum Zuführen und Einpressen des Harzes in Zwischenräume zwischen Presse, Blechpaket und Permanentmagneten.

Vorzugsweise weist die Harzversiegelungsvorrichtung eine Vielzahl der Blechpaket-Werkstückträger zum Handling einer Vielzahl von Blechpaketen oder Blechpaketstapeln in der industriellen Großserienfertigung von Rotoren auf.

Gemäß einem weiteren Aspekt schafft die Erfindung eine Rotorherstellanlage zum Herstellen eines Rotors einer elektrischen Maschine, umfassend mehrere Anlagen-Komponenten, von denen wenigstens eine eine Harzversiegelungsvorrichtung gemäß einer der voranstehenden Ausgestaltungen ist.

Gemäß einem weiteren Aspekt schafft die Erfindung ein im Zuge einer Herstellung eines Rotors einer elektrischen Maschine durchzuführendes Harzversiegelungsverfahren zum Versiegeln von Permanentmagneten in oder an wenigstens einem Blechpaket eines Rotorkerns, umfassend:
a) Bereitstellen wenigstens eines Blechpaket-Werkstückträgers nach einer der voranstehenden Ausgestaltungen,
b) Bereitstellen wenigstens eines Blechpakets;
c) Einsetzen des wenigstens einen Blechpakets in den wenigstens einen Blechpaket-Werkstückträger;
d) Einsetzen von Permanentmagneten in Magnetaufnahmekavitäten des wenigstens einen Blechpakets;
e) Pressen des in dem Blechpaket-Werkstückträgers gehaltenen wenigstens einen Blechpakets mittels einer Presse,
f) Zuführen von Harz, um die Permanentmagnete in den Magnetkavitäten zu versiegeln.

Die Kennzeichnung der Schritte mit a), b), c), ... dient dabei lediglich der einfacheren Bezugnahme und soll keinerlei Hinweis auf eine bestimmte Reihenfolge bedeuten. Insbesondere ist die Reihenfolge der Schritte a) und b) beliebig und weiter ist die Reihenfolge der Schritte c) und d) beliebig. Die Magnete oder einer oder mehrere der Magnete können vor, während oder nach dem Einsetzen des Blechpakets den Blechpaket-Werkstückträger eingesetzt werden.

Vorzugsweise umfasst das Harzversiegelungsverfahren den Schritt:
f1) Zuführen von Harz direkt in das wenigstens eine Blechpaket oder durch eine Wuchtscheibe in das wenigstens eine Blechpaket.

Vorzugsweise umfasst das Harzversiegelungsverfahren den Schritt:
g) Identifizieren des Werkstückträgers und/oder des darin gehaltenen Blechpaket-Werkstücks durch Auslesen einer maschinenlesbaren Codierung an dem Werkstückträger und automatisches Steuern des Harzversiegelungsverfahrens in Abhängigkeit von der Identifizierung.

Vorzugsweise umfasst das Harzversiegelungsverfahren den Schritt:
h) Anpassen des Werkstückträgers an das zu haltende Werkstück durch Verändern der Position der stiftförmigen Führungselemente.

Vorzugsweise umfasst das Harzversiegelungsverfahren den Schritt:
i) Durchführen eines Single-Stack-Moldings durch Halten von mit Permanentmagneten versehenen Einzelblechpakten in dem Werkstückträger und Durchführen der Schritte e) und f) an den Einzelblechpaketen und Zusammensetzen der versiegelten Einzelblechpakete zu einem Rotorkern. Vorzugsweise umfasst das Harzversiegelungsverfahren den Schritt:
j) Durchführen eines Multi-Stack-Moldings durch Stapeln mehrerer Einzelblechpakete zu einem in dem Blechpaket-Werkstückträger gehaltenen und mit Permanentmagneten versehenen Blechpaketstapel und Durchführen der Schritte e) und f) an dem Blechpaketstapel.

Vorzugsweise umfasst das Harzversiegelungsverfahren den Schritt:
k) Verwenden einer Harzversiegelungsvorrichtung nach einer der voranstehenden Ausgestaltungen.

Gemäß einem weiteren Aspekt schafft die Erfindung ein Computerprogramm umfassend Anweisungen, die eine Harzversiegelungsvorrichtung nach einer der voranstehenden Ausgestaltungen dazu veranlassen, das Harzversiegelungsverfahren nach einer der voranstehenden Ausführungsformen durchzuführen.

Bevorzugte Ausgestaltungen der Erfindung betreffen einen Werkstückträger für Transfer-Molding von Blechpaketen ohne Rotorwelle.

Bevorzugte Ausgestaltungen der Erfindung sehen eine Aufnahme von Einzelblechpaketen ("substack") für Single-Stack-Molding und Blechpaketstapel ("stack") für Multi-Stack-Molding auf einem Werkstückträger durch Führungselemente am Außendurchmesser und / oder Innendurchmesser (Rotorwellenbohrung) des Blechpakets für ein Molding ohne Rotorwelle vor.

Einige Ausführungsformen des Werkstückträgers sind für eine werkstücktypvariable Einstellung der Führungselemente eingerichtet. Dies erfolgt beispielsweise durch ein flexibles Bohrbild in der Aufnahmeplatte und/oder durch Führungselemente mit exzentrischem Befestigungsgewinde -z.B. derart, dass eine von der Achse der Rotorwellenbohrung des Blechpakets aus gesehene radiale Zustellbewegung der Führungselemente durch Rotation der Führungselemente um das exzentrisch zum Führungsdurchmesser angebrachte Befestigungsgewinde zur Aufnahmeplatte ermöglicht ist.

Einige Ausführungsformen weisen Ausrichtmerkmale zur eindeutigen Winkelorientierung des Werkstücks auf dem Werkstückträger bezogen auf die Verdrehung um die Achse der Rotorwellenbohrung auf. Dies erfolgt z.B. durch Indexstifte im Blechpaket und/oder durch Orientierelemente an einer Nut-/Feder-Verbindung in der Rotorwellenbohrung des Blechpakets.

Einige Ausführungsformen sind für eine Typcodierung und Bauteilverfolgbarkeit durch am Werkstückträger angebrachter Codierung eingerichtet. Zum Beispiel ist ein DMC-Code vorgesehen. Damit einhergehend ergibt sich bei solchen Werkstückträgern verwendenden Vorrichtungen und Verfahren zur Harzversiegelung die Möglichkeit, die Prozessparameter einer Moldingpresse werkstücktypflexibel zu steuern. Z.B. wird die Menge des zugeführten Harzes, insbesondere EMC, die Zusammenspannkraft des Blechpaketstapels in axialer Richtung, die Kraft für Einpressen des Harzes, insbesondere EMC, etc. werkstückflexibel gesteuert.

Einige Ausführungsformen sehen Aufnahmen auf der Unterseite der Aufnahmeplatte des Werkstückträgers zur positionsgenauen Übergabe des Werkstückträgers in den jeweiligen Anlagenkomponenten - z.B. Moldingpresse, Erwärmeinheit, Zuführeinheit, Ablage - vor.

Einige Ausführungsformen sehen Aufnahmen an der Seite des Werkstückträgers zum form- und/oder kraftschlüssigen Handling des Werkstückträgers durch ein Handlingssystem - z. B. Roboter oder Linearportal - vor.

Bei einigen Ausführungsformen sind Entlüftungskanälen auf der Oberseite der Aufnahmeplatte für die Entlüftung der Magnetkavitäten im Blechpaket beim Moldingvorgang integriert.

Einige Ausführungsformen ermöglichen das Molden direkt in das Blechpaket oder durch eine Wuchtscheibe in das Blechpaket.

Im Folgenden werden Vorteile sowie besondere technische Effekte einiger bevorzugter Ausgestaltungen der Erfindung erläutert.

Mit bevorzugten Ausführungsformen ist eine Gefahr eines Aushärtens der Einzelblechpakete auf einem zentrischen Dorn in der Rotorwellenbohrung verhindert. Dies ermöglicht einfache Gegenmaßnahmen im Störungsfall und/oder eine Reduzierung der Maschinen- und Werkstückträgerausfallzeit im Störungsfall.

Hintergrund: Wenn ein Werkzeugträger mit einem zentrischen Dorn in der Rotorwellenbohrung beim Harzversiegeln verwendet wird, gibt es die Gefahr des Aushärtens der Einzelblechpakete auf dem zentrischen Dorn. Beim Harzversiegeln müssen qualitativ schlechte Blechpakete vor dem Einpressen des Harzes, wie insbesondere EMC, derart in axialer Richtung zusammengespannt werden, dass für das flüssige Harz eine ausreichende Abdichtung zwischen den einzelnen Blechlamellen erfolgt, damit kein flüssiges Harz zwischen die einzelnen Blechlamellen fließt. In der Praxis ist dieser Fehlerfall nicht zu 100% zu vermeiden. Fließt das flüssige Harz nun zwischen den einzelnen Blechlamellen in Richtung des zentrischen Dorns in der Rotorwellenbohrung und füllt teilweise den Spalt zwischen Blechpaketrotorwellenbohrung und Zentrierdorn auf dem Werkstückträger, härtet das Harz aus und die Einzelblechpakete sind ungewollt auf dem Werkstückträger fixiert. Dieses Problem wird durch bevorzugte Ausgestaltungen der Erfindung vermieden.

Mit bevorzugten Ausführungsformen wird eine Beschädigung der Rotorwellenbohrung im Blechpaket verhindert. Dies ermöglicht konstante Eingangsbedingungen in den Prozess "Welle fügen" hinsichtlich der Oberflächenbeschaffenheit der Rotorwellenbohrung im Blechpaket ohne Beschädigungen durch vorgelagerte Handlings- und Moldingprozesse.

Hintergrund: Bei bisherigen Werkstückträgern gibt es - insbesondere aufgrund des zentralen Dorns - die Gefahr einer Beschädigung der Rotorwellenbohrung im Blechpaket. Beim manuellen oder automatischen Handling der Blechpakete hinsichtlich des Be- und Entladens auf bzw. von dem Werkstückträger, dient die zentrisch verlaufende Rotorwellenbohrung im Blechpaket als Führungsmerkmal. In genau diese Rotorwellenbohrung im Blechpaket soll in einem späteren Prozessschritt die Rotorwelle gefügt werden. Die Qualität des Fügens der Rotorwelle in die Rotorwellenbohrung des Blechpakets bemisst sich nach der Qualität der Ausbildung eines Presssitzes (kraftschlüssige Verbindung) - maßgeblich dafür ist die Oberflächenbeschaffenheit der Fügepartner Rotorwelle und Rotorwellenbohrung im Blechpaket. Je beschädigter die Rotorwellenbohrung im Blechpaket infolge des Handlings durch einen Werkstückträger ist, desto geringer ist die Qualität des Fügeergebnisses beim Fügen der Rotorwelle (z.B. infolge von Spanbildung beim Fügevorgang).

Bei bisherigen Werkstückträgern erfordert die Erwärmung des zentrischen Dorns aufgrund großer Masse eine große Erwärmleistung. Hintergrund: Für den Moldingvorgang werden bei bevorzugten Ausgestaltungen des Harzversiegelns die Blechpakete inkl. Werkstückträger auf eine definierte Prozesstemperatur erwärmt (Bereich ca. 150... 200°C). Dabei ist eine homogene Erwärmung durch das gesamte Blechpaket erwünscht. Deshalb werden bei bevorzugten Ausgestaltungen die Blechpakete zusammen mit dem Werkstückträger homogenisiert werden. Für die Erwärmung des Werkstückträgers ist es hinsichtlich der Energieeffizienz günstiger, wenn weniger Masse erwärmt werden muss. Bei bisherigen Werkstückträgern hat der zentrische Dorn in der Rotorwellenbohrung des Blechpakets jedoch eine große "thermisch träge" Masse, für deren Erwärmung entsprechend Energie und Zeit erforderlich ist. Bei bevorzugten Ausführungsformen des erfindungsgemäßen Werkstückträgers ist dagegen die Energieeffizienz hinsichtlich der Erwärmung - verglichen mit dem zentrischen Dorn und der aufgrund dessen großer Masse erforderlichen großen Erwärmleistung - deutlich verbessert. Die Energieeffizienz lässt sich verbessern. Dies ermöglicht eine Minimierung der Taktzeit hinsichtlich der Erwärmdauer. Eine Verbesserung des Erwärmprozesses des Blechpakets auf dem Werkstückträger durch optimiertes Anströmverhalten in Konvektionsöfen ist ermöglicht.

Bei bisherigen Werkstückträgern gibt es keine Flexibilität hinsichtlich unterschiedlichen Werkstücktypen. Sollen mehrere Werkstücktypen (z.B. Blechpakete mit unterschiedlichen Außen- und Innendurchmessern (Rotorwellenbohrung)) gefertigt werden, ist durch den unflexiblen zentrischen Dorn auf dem Werkstückträger mit fixem Durchmesser keine Flexibilität gegeben. Neue Werkstücktypen benötigen neue Werkstückträger. Einige Ausführungsformen der Erfindung sehen dagegen eine Verbesserung der Flexibilität des Werkstückträgers hinsichtlich unterschiedlichen Werkstücktypen vor. Dies ermöglicht eine Lösung sowohl für Single- als auch für Multistack. Die bevorzugten Ausführungsformen bieten eine Lösung für Marktanforderungen hinsichtlich der Flexibilität der Moldingpresse für eine Vielzahl an Werkstücktypen. Die bevorzugten Ausführungsformen bieten eine Lösung für automatisiertes, vom Werkstück unabhängiges Handling des Werkstückträgers. Die bevorzugten Ausführungsformen ermöglichen ein geringeres Bauteilaufkommen infolge eines flexibel rüstbaren Werkstückträgers gegenüber einer Vielzahl an Werkstückträgern für unterschiedliche Werkstücktypen. Bei besonders bevorzugten Ausführungsformen ist ein werkstückspezifisches Datentracking über Codierung am Werkstückträger ermöglicht.

Ausführungsbeispiele der Erfindung werden im Folgenden anhand der beigefügten Zeichnungen näher erläutert. Darin zeigt:
- Fig. 1: eine schematische Schnittansicht einer ersten Ausführungsform einer Harzversiegelungsvorrichtung, eingerichtet für ein Single-Stack-Molding;
- Fig. 2: eine schematische Schnittansicht einer zweiten Ausführungsform einer Harzversiegelungsvorrichtung, eingerichtet für ein Multi-Stack-Molding;
- Fig. 3: eine Draufsicht auf eine erste Ausführungsform einer Blechpaket-Werkstückträger-Anordnung mit einer ersten Ausführungsform eines Blechpaket-Werkstückträgers zur Verwendung in der Harzversiegelungsvorrichtung gemäß Fig. 1 oder Fig. 2 und wenigstens einem darin gehaltenen Blechpaket;
- Fig. 4: eine Seitenansicht der Blechpaket-Werkstückträger-Anordnung von Fig. 3, in der Ausführung zum Einsatz in der Harzversiegelungsvorrichtung von Fig. 2;
- Fig. 5: eine schematische Seitansicht der Harzversiegelungsvorrichtung dem Blechpaket-Werkstückträger und mehreren darin aufgenommen Blechpaketen;
- Fig. 6: eine Draufsicht auf eine Blechpaket-Werkstückträger-Anordnung mit einer zweiten Ausführungsform des Blechpaket-Werkstückträgers zur Verwendung in der Harzversiegelungsvorrichtung nach einer der Figuren 1, 2 und 4 und mit wenigstens einem darin gehaltenen Blechpaket;
- Fig. 7: eine schematische Blockdarstellung einer Rotorherstellanlage zum Herstellen eines Rotors einer elektrischen Maschine mit der Harzversiegelungsvorrichtung als einer Anlagenkomponente.

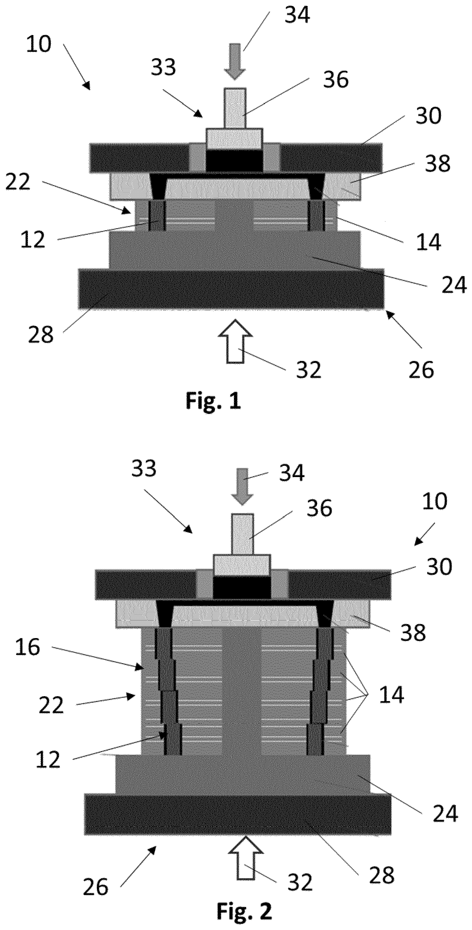

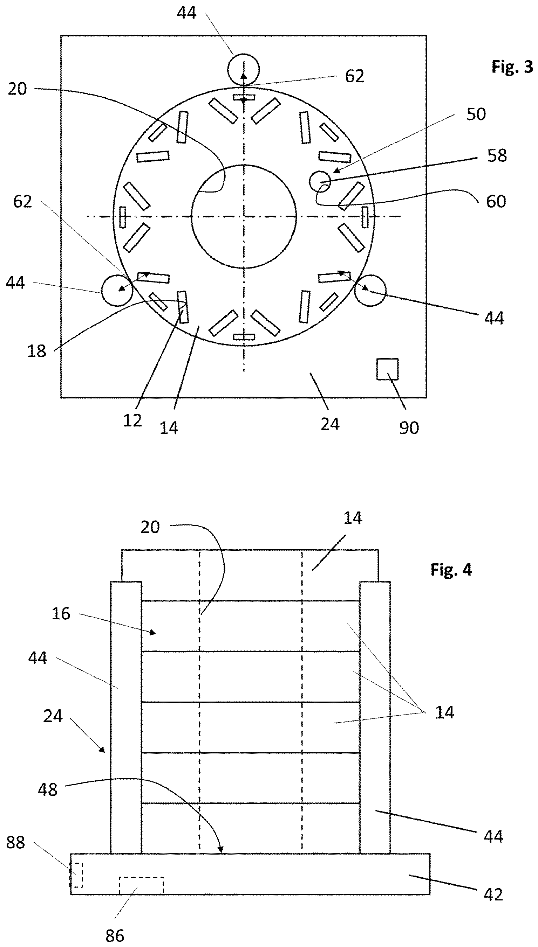

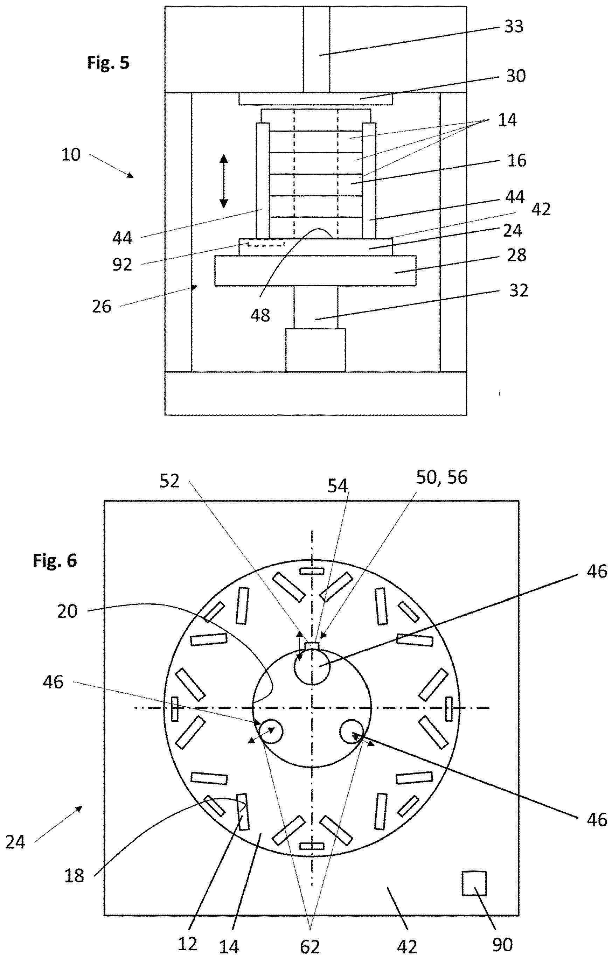

In den Fig. 1, 2 und 5 ist schematisch eine Harzversiegelungsvorrichtung 10 gezeigt. Die Harzversiegelungsvorrichtung 10 dient zur Fixierung von Magneten 12 in einem wenigstens einem Blechpaket 14 eines Rotorkerns 16 mittels Harzversiegelung. Das Blechpaket 14 weist Magnetaufnahmekavitäten 18 zur Aufnahme von Magneten 12 und eine Rotorwellenöffnung 20 auf. Das wenigstens eine Blechpaket 14 ist in den Fig. 3 bis 6 als Teil einer Blechpaket-Werkstückträger-Anordnung 22 zusammen mit einem Blechpaket-Werkstückträger 24 (im Folgenden auch einfach Werkstückträger 24 genannt) dargestellt. Dabei ist in den Fig. 3 bis 5 eine erste Ausführungsform des Blechpaket-Werkstückträger 24 und in Fig. 6 eine zweite Ausführungsform des Blechpaket-Werkstückträgers 24 gezeigt.

Eine Magnetfixierung mittels Harzversiegelung wird in der Fachsprache auch oft als "Molding" bezeichnet. In bevorzugten Ausgestaltungen ist die Harzversiegelungsvorrichtung 10 zum Durchführen des Prozesses der Magnetfixierung in Rotorblechpaketen mittels EMC (Epoxy Molding Compound, "resin") eingerichtet, wobei Einzelblechpakete (substacks) oder Blechpaketstapel beim Molding ohne Rotorwelle gehandhabt und ausgerichtet werden.

Demnach ist die Harzversiegelungsvorrichtung 10 gemäß Fig. 1 dazu eingerichtet, z.B. bei einem Single-Stack-Molding Magnete 12 in einzelnen Blechpaketen 14 mittels Harzversiegelung zu fixieren, wobei in der Rotorwellenöffnung 20 aber noch keine Rotorwelle eingefügt ist. Die so angefertigten Blechpakete 14 mit fixierten Magneten 12 können dann zu einem Rotorkern 16 zusammengesetzt werden, und die Rotorwelle (nicht dargestellt) kann in die Rotorwellenöffnung 18 eingefügt werden.

Gemäß der Ausführung von Fig. 2 ist die Harzversiegelungsvorrichtung 10 dazu eingerichtet, bei einem Multi-Stack-Molding mittels Harzversiegelung Magnete 12 in einem Blechpaketstapel aus mehreren aufeinander gestapelten Blechpaketen 14 noch vor Montage einer Rotorwelle zu fixieren.

Beim Prozess der Magnetfixierung in Rotorblechpaketen mittels EMC (Epoxy Molding Compound, "resin", Beispiel für Harz) werden in Rotorblechpaketen eingefügte Permanentmagnete, die zu diesem Zeitpunkt meist noch nicht magnetisiert sind, mit Harz umgossen. Durch Aushärtung des Harzes wird der Magnet in der Kavität 18 im Blechpaket 14 fixiert.

Bei den Blechpaketen 14 handelt es sich um gestapelte Elektrobleche, welche je nach Konstruktionsprinzip auf unterschiedliche Art und Weise "zusammenhalten" (z.B. Stanzpacketieren, Lasern, Verkleben mit Backlack).

Die Harzversiegelungsvorrichtung 10 weist eine Presse 26 - in der Fachsprache auch Moldingpresse genannt - mit einem ersten Formwerkzeug 28 und einem zweiten Formwerkzeug 30 auf. Die Formwerkzeuge 28, 30 werden in der Fachsprache auch Moldingtools genannt. Das erste Formwerkzeug 28 ist beispielsweise ein unteres Moldingtool der Presse 26, und das zweite Formwerkzeug 30 ist beispielsweise das obere Moldingtool der Presse 26. Die Formwerkzeuge 28, 30 sind mittels eines Aktors 32 zum Verpressen wenigstens eines darin aufgenommenen Blechpakets 14 mit Magneten 12 aufeinander zu und voneinander weg bewegbar.

Bei den in Fig. 1 und 2 dargestellten Ausführungen weist die Moldingpresse 26 demnach zwei Formwerkzeuge 28, 30 (oben und unten), einen Aktor 32 zum Antreiben der Hubbewegung für das Schließen und Öffnen der Formwerkzeuge 28, 30 und eine Harzzuführeinrichtung 33 auf. Die Harzzuführeinrichtung 33 weist einen Aktor 34 zum Antreiben einer Hubbewegung für das Einpressen des EMC auf. Zunächst wird das wenigstens eine Blechpaket 14 - aufgenommen in einen Blechpaket-Werkstückträger 24 - in die Moldingpresse 26 geladen und die Formwerkzeuge 28, 30 werden geschlossen.

Das EMC wird entweder als Pulver oder in Pellets (gepresstes Pulver) in die Harzversiegelungsvorrichtung 10 geladen und dort unter Temperatureinfluss aufgeschmolzen und verflüssigt.

Durch eine Hubbewegung eines Transferzylinders 36 der Harzzuführeinrichtung 33 wird das EMC unter Temperatur und Druck in die Zwischenräume zwischen dem wenigstens einen Blechpaket 14 und den Magneten 12 gedrückt. Bei den dargestellten Ausführungen weist das zweite Formwerkzeug 30 eine Angussmaske 38 auf, die den Bereich des aufgeschmolzenen EMCs mit den Angusspunkten zum Blechpaket 14 verbindet. Bei einigen hier nicht dargestellten Ausführungen ist an dem wenigstens einen Blechpaket 14 noch eine Wuchtscheibe (Funktion: Auswuchten des Rotors) vorgesehen, durch die hindurch die Harzzufuhr erfolgt.

Nach dem Eindrücken des EMCs bleibt die Moldingpresse 26 für eine definierte Aushärtezeit geschlossen - in dieser härtet das EMC in dem wenigstens einen Blechpaket 14 und der Angussmaske 38 aus.

Fig. 1 zeigt die Harzversiegelungsvorrichtung 10 bei einem Single-Stack-Molding. Dabei wird ein einzelnes Blechpaket 14 mit Harz versiegelt (Molding). Vorteilhaft dabei sind die kurzen Fließwege, eine größere Prozesssicherheit und ein einfacherer, mit weniger Materialaufwand herstellbarer Blechpaket-Werkzeugträger 24 zum Handling des Blechpakets 14. Nachteilig ist, dass für gleichen Ausstoß von Rotoren in einer Rotorherstellanlage 40 pro Zeiteinheit eine höhere Anzahl an Pressen 26 und eine höhere Anzahl von Blechpaket-Werkstückträgern 24 benötigt wird und dass ein höherer Angussverlust entstehend kann.

Fig. 2 zeigt die Harzversiegelungsvorrichtung 10 bei einem Multi-Stack-Molding. Dabei werden mehrere Blechpakete 14 zu einem Blechpaketstapel gestapelt. In dem Blechpaketstapel können die Blechpakete verschränkt oder unverschränkt sein. Der Blechpaket-Werkstückträger 24 ist entsprechend zur Aufnahme des Blechpaketstapels ausgebildet. Nachteilig beim Multi-Stack-Molding sind die langen Fließwege, eventuell kritische Durchschnittsquerschnitte, ein komplexerer Werkstückträger 24 und ein eventuell schwierigeres anschließendes Fügen der Rotorwelle (nicht dargestellt). Vorteilhaft ist, dass nur ein Anguss pro Rotor erfolgen muss, warum die Anzahl der Pressen 26 und der Werkstückträger 24 geringer gewählt werden kann.

In den Fig. 1 und 2 sind die Werkstückträger 24 nur sehr schematisch als Block dargestellt. Im Folgenden werden vorteilhafte Ausgestaltungen der Werkstückträger 24 detaillierter anhand der Darstellungen in den Fig. 3 bis 6 näher erläutert, wobei die Fig. 3 bis 5 eine erste Ausführungsform des Werkstückträgers 24 zeigen und Fig. 6 eine zweite Ausführungsform des Werkstückträgers 24 zeigt.

Der Blechpaket-Werkstückträger 24 ist zum Halten wenigstens eines mit einer Rotorwellenöffnung 20 versehenen Blechpakets 14 eines Rotorkerns 16 bei einer Harzversiegelung, bei der Permanentmagnete an oder in dem wenigstens einen Blechpaket mittels eines Harzes versiegelt werden, eingerichtet.

Der Blechpaket-Werkstückträger 24 weist eine Aufnahmeplatte 42 und mehrere sich von der Aufnahmeplatte 42 erstreckende stiftförmige Führungselemente 44, 46 auf.

Die stiftförmigen Führungselemente 44, 46 sind zum Positionieren des wenigstens einen Blechpakets 14 in einer radialen Richtung ausgebildet, so dass sie an in Umfangsrichtung versetzten Stellen an dem Innendurchmesser - siehe Fig. 6 - oder dem Außendurchmesser - Fig. 3-5 - des wenigstens einen Blechpakets 14 angreifen.

Bei den dargestellten Ausführungsformen sind wenigstens drei stiftförmige Führungselemente 44, 46 vorgesehen. Die Führungselemente 44, 46 sind bei der Ausgestaltung der Fig. 3 bis 5 als Außen-Führungselemente 44 zum Angreifen an in Umfangsrichtung versetzten Stellen an dem Außendurchmesser des wenigstens einen Blechpakets 14 ausgebildet. Bei der Ausgestaltung der Fig. 6 sind die stiftförmigen Führungselemente 44, 46 als Innen-Führungselemente 46 zum Angreifen an in Umfangsrichtung versetzten Stellen an dem Innendurchmesser des wenigstens einen Blechpakets ausgebildet.

Bei weiteren, hier nicht näher dargestellten Ausführungsformen umfassen die stiftförmigen Führungselemente 44, 46 sowohl mindestens ein Außen-Führungselement 44 zum Angreifen am Außendurchmesser als auch mindestens ein stiftförmiges Innen-Führungselement 46 zum Angreifen am Innendurchmesser.

Bei einigen Ausführungsformen der Werkstückträger 24 sind die Führungselemente 44, 46 gleichmäßig um ein Zentrum einer Auflagefläche 48 der Aufnahmeplatte 42 verteilt vorgesehen.

Bei einigen Ausführungsformen weisen die Führungselemente 44, 46 eine konvexe, kreisförmige oder ovale Außenkontur derart auf, dass ein linienförmiger Kontakt mit dem Innendurchmesser oder dem Außendurchmesser des wenigstens einen Blechpakets 14 ermöglicht ist. Durch Einfassung an wenigstens dreier solcher linienförmigen Kontakte ist das wenigstens eine Blechpaket 14 exakt positioniert.

Der Blechpaket-Werkstückträger 24 gemäß den dargestellten Ausführungsformen hat weiter eine Ausrichteinrichtung 50, die dazu eingerichtet ist, das wenigstens eine Blechpaket 14 in einer Umfangsrichtung zu positionieren. Dies erfolgt insbesondere durch formschlüssigen Eingriff der Ausrichteinrichtung 50 mit dem wenigstens einen Blechpaket 14.

Die Ausrichteinrichtung 50 kann - unabhängig davon, ob Außen-Führungselemente 44 oder Innen-Führungselemente 46 vorgesehen sind - ganz unterschiedliche Eingriffselemente aufweisen. Beispiele solcher Eingriffselemente umfassen:
- eine Feder 52 an einem der stiftförmigen Führungselemente 44, 46 zum Bilden einer Nut-Feder-Verbindung 56 durch Eingreifen in eine Nut 54 an dem wenigstens einen Blechpaket 14,
- eine Nut an einem der stiftförmigen Führungselemente 44, 46 zum Bilden einer Nut-Feder-Verbindung 56 zusammen mit einer Feder an dem wenigstens einen Blechpaket 14,
- eine Ausnehmung an der Aufnahmeplatte 42 zur Aufnahme eines an dem Blechpaket vorgesehenen Indexstifts und
- einen Indexstift 58, der von der Aufnahmeplatte 42 zum Eingreifen in eine sich axial erstreckende Ausnehmung 60 an dem Blechpaket 14 vorsteht.

Bei einigen Ausführungsformen weist der Blechpaket-Werkstückträger 24 eine Einstelleinrichtung 62 zum Einstellen der Position der Führungselemente 44, 46 zwecks Anpassung an unterschiedlich dimensionierte Blechpakete. Die Einstelleinrichtung 62 ist in den Fig. 3 und 6 nur schematisch durch Doppelpfeile dargestellt. In konkreten Ausgestaltungen (nicht dargestellt), sind z.B. mehrere Befestigungseinheiten an der Aufnahmeplatte 42 vorgesehen, um wahlweise die stiftförmigen Führungselemente 44, 46 an vorbestimmten Positionen zu befestigen. Es können z.B. mehrere Befestigungslöcher in der Aufnahmeplatte zum wahlweisen Einsetzen der stiftförmigen Führungselemente 44, 46 vorgesehen sein. Die Führungselemente 44, 46 können an ihrer Unterseite zur Befestigung an der Aufnahmeplatte auch einen exzentrischen, zu einem Zentrum des jeweiligen Führungselements 44, 46 versetzten Befestigungsvorsprung aufweisen. Durch Einsetzen des Befestigungsvorsprungs in eine Befestigungsöffnung in der Aufnahmeplatte 42 lassen sich die Führungselemente 44, 46 befestigen. Durch Drehen der Führungselemente 44, 46 um den exzentrischen Befestigungsvorsprung lässt sich die radiale Position des Zentrums des Führungselements 44, 46 verändern, um die Führungselemente 44, 46 an unterschiedliche Außendurchmesser oder Innendurchmesser von Blechpaketen von unterschiedlichen Rotortypen anpassen.

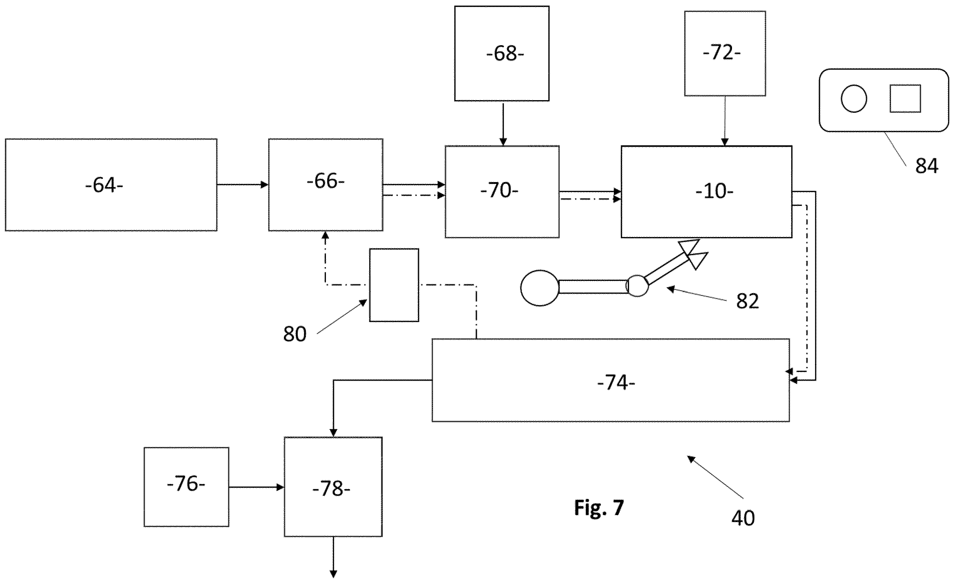

In Fig. 7 ist eine Rotorherstellanlage 40 als Blockschaltbild schematisch dargestellt. Mit durchgehenden Pfeilen sind dabei Wege von Teilen des Rotors - insbesondere Blechpaket 14 - und mit strichpunktierten Pfeilen ist ein vorzugsweise umlaufender Weg der darin verwendeten Blechpaket-Werkstückträger 24 eingesetzt. Die Rotorherstellanlage 40 weist beispielsweise die folgenden Anlagenkomponenten auf:
- eine Blechpaket-Bereitstelleinrichtung 64 zum Bereitstellen der Blechpakete 14
- eine Aufnahmeeinrichtung 66, in der wenigstens ein Blechpaket 14 auf einem der Blechpaket-Werkstückträger 14 aufgenommen wird,
- eine Magnet-Bereitstelleinrichtung 68 zum Bereitstellen der Magnete 12,
- eine Magnet-Einführeinrichtung 70 zum Einfügen der Magnete 12 in die Magnetkavitäten 18,
- die Harzversiegelungsvorrichtung 10 gemäß einer der zuvor erläuterten Ausführungen,
- eine Harz-Bereitstelleinrichtung 72 zum Liefern des pulverförmigen oder pelletförmigen Harzmaterials zu der Harzversiegelungsvorrichtung 10,
- eine Trenn- und Aufbereitungseinrichtung 74, in der das wenigstens eine Blechpaket 14 von dem Werkstückträger 24 getrennt wird und aufbereitet wird; eventuell werden auch die Werkstückträger 24 aufbereitet, z.B. gereinigt,
- eine Rotorwellen-Bereitstelleinrichtung 76 zum Bereitstellen der Rotorwellen,
- eine Rotorwellen-Montageeinrichtung 78 zum Einsetzen der Rotorwelle in die Rotorwellenöffnung 20, und
- eine Werkstückträger-Bereitstelleinrichtung 80 zum Bereitstellen der Werkstückträger 24 für den nächsten Prozesslauf; eventuell unter Anpassung mittels der Einstelleinrichtung 62 an ein unterschiedliches Blechpaket 14.

Weiter weist die Rotorherstellanlage 40 wenigstens eine Transporteinrichtung 82 wie z.B. Roboterarm oder Linearportal, und eine elektronische Steuerung 84 mit Prozessor und Speicher auf, in dem ein entsprechendes Computerprogramm zur Steuerung geladen ist. Die Steuerung 84 weist insbesondere auch eine Steuereinheit der Harzversiegelungsvorrichtung 10 auf. Die Steuereinheit weist insbesondere als Teil des Computerprogramms Anweisungen auf, die die Harzversiegelungsvorrichtung 10 veranlassen, das im Folgenden noch dargestellte Harzversiegelungsverfahren durchzuführen.

Die Darstellung in Fig. 7 zeigt nur ein Beispiel, die Anordnung der einzelnen Anlagen-Komponenten im Materialfluss kann auch unterschiedlich ausgebildet sein. Zum Beispiel können Magnete 12 bereits in den einzelnen Blechpaketen 14 noch vor deren Aufnahme in den Werkstückträgern 24 eingesetzt werden.

Wie in Fig. 4 angedeutet, weist der Blechpaket-Werkstückträger 24 bei einigen Ausführungsformen eine Anlagen-Komponenten-Schnittstelle 86 auf. Die Anlagen-Komponenten-Schnittstelle 46 ist hier an der Unterseite der Aufnahmeplatte 42 ausgebildet und mit wenigstens einer Aufnahme zur positionsgenauen Übergabe des Blechpaket-Werkstückträgers 24 an die Anlagen-Komponenten 66, 70, 72, 10, 74, 80 der Rotorherstellanlage 40 versehen.

Gemäß Fig. 4 weisen weiter einige Ausführungsformen des Blechpaket-Werkstückträgers 24 eine Transporteinheit-Schnittstelle 88 an der Seite des Werkstückträgers 24, insbesondere der Aufnahmeplatte 42, mit wenigstens einer Aufnahme zum positionsgenauen form- und kraftschlüssigen Erfassen des Werkstückträgers 24 durch die wenigstens eine Transporteinheit 82 der Rotorherstellanlage 40 auf.

Gemäß Fig. 6 weisen einige Ausführungsformen des Blechpaket-Werkstückträgers 25 eine maschinenlesbare Codierung 90 zur Identifikation des Werkstückträgers 24 und/oder des darin aufzunehmenden Blechpaket-Werkstücks auf. Die entsprechenden Anlagen-Komponenten weisen Codeleser (nicht dargestellt) zum Lesen der Codierung 90 auf. Diese Informationen werden an die Steuerung 84 übermittelt, die dann den Prozess mit den jeweils für das individuelle Werkstück vorgesehenen Parametern durchführt.

Gemäß Fig. 5 weisen einige Ausführungsformen des Blechpaket-Werkstückträgers 24 wenigstens einen Entlüftungskanal an der Oberseite der Auflageplatte 42 zur Entlüftung von Magnetaufnahmekavitäten 20 des wenigstens einen Blechpakets 14 bei der Harzversiegelung auf.

Es wird weiter ein Harzversiegelungsverfahren vorgeschlagen, das im Zuge einer Herstellung eines Rotors einer elektrischen Maschine durchzuführen ist. Mit dem Harzversiegelungsverfahren werden Permanentmagneten in oder an wenigstens einem Blechpaket 14 eines Rotorkerns 16 versiegelt. Das

Harzversiegelungsverfahren umfasst die im folgenden aufgelisteten Schritte:
a) Bereitstellen wenigstens eines der Blechpaket-Werkstückträger 24,
b) Bereitstellen wenigstens eines Blechpakets 14;
c) Einsetzen des wenigstens einen Blechpakets 14 ohne Rotorwelle in den wenigstens einen Blechpaket-Werkstückträger 24;
d) Einsetzen von Permanentmagneten 12 in Magnetaufnahmekavitäten 20 des wenigstens einen Blechpakets 14;
e) Pressen des in dem Blechpaket-Werkstückträgers 24 gehaltenen wenigstens einen Blechpakets mittels einer Presse 26,
f) Zuführen von Harz, um die Permanentmagnete 12 in den Magnetkavitäten 18 zu versiegeln.

Die Benennung der Schritte mit a), b), c)... erfolgt nur zur einfacheren Referenzierung und stellt keinen Hinweis auf eine bestimmte Reihenfolge dar; mögliche Reihenfolgen ergeben sich vielmehr für den Fachmann aus dem Gesamtzusammenhang.

Bei einigen Ausführungsformen des Harzversiegelungsverfahrens wird das Harz direkt in das wenigstens eine Blechpaket 14 oder durch eine Wuchtscheibe in das wenigstens eine Blechpaket 14 zugeführt. Bei einigen Ausführungsformen wird der Werkstückträger 24 und/oder des darin gehaltenen Blechpaket-Werkstück durch Auslesen der maschinenlesbaren Codierung 90 an dem Werkstückträger 24 identifiziert. Ein automatisches Steuern des Harzversiegelungsverfahrens wird dann in Abhängigkeit von der Identifizierung durchgeführt. Bei einigen Ausführungsformen wird der Werkstückträger 24 durch Verändern der Position der stiftförmigen Führungselemente 44, 46, insbesondere mittels der Einstelleinrichtung 62, an das zu haltende Werkstück angepasst. Wie oben bereits erwähnt kann ein Single-Stack-Molding oder ein Multi-Stack-Molding durchgeführt werden. Insbesondere wird das Harzversiegelungsverfahren mittels der Harzversiegelungsvorrichtung 10 oder der Rotorherstellanlage 40 durchgeführt.

Zur Verfahrensvereinfachung und Erhöhen der Prozesssicherheit eines im Zuge der Herstellung eines Rotors einer elektrischen Maschine durchzuführenden Harzversiegelungsverfahrens schafft die Erfindung einen Blechpaket-Werkstückträger (24) zum Halten wenigstens eines mit einer Rotorwellenöffnung (20) versehenen Blechpakets (14) eines Rotorkerns (16) bei einer Harzversiegelung, bei dem Permanentmagnete (12) an oder in dem wenigstens einen Blechpaket (14) mittels eines Harzes versiegelt werden, wobei der Blechpaket-Werkstückträger (24) eine Aufnahmeplatte (42) und mehrere sich von der Aufnahmeplatte (42) erstreckende stiftförmige Führungselemente (44, 46) aufweist, die zum Positionieren des wenigstens einen Blechpakets (14) in einer radialen Richtung durch Angreifen an in Umfangsrichtung versetzten Stellen an dem Innendurchmesser und/oder dem Außendurchmesser des wenigstens einen Blechpakets (14) ausgebildet sind.

### Bezugszeichenliste:

- 10: Harzversiegelungsvorrichtung
- 12: Magnet
- 14: Blechpaket
- 16: Rotorkern
- 18: Magnetaufnahmekavität
- 20: Rotorwellenöffnung
- 22: Blechpaket-Werkstückträger-Anordnung
- 24: Blechpaket-Werkstückträger
- 26: Presse (Moldingpresse)
- 28: erstes Formwerkzeug
- 30: zweites Formwerkzeug
- 32: Aktor (Hubbwegung Presse)
- 33: Harzzuführeinrichtung
- 34: Aktor (Hubbewegung Harz-Zufuhr)
- 36: Transferzylinder
- 38: Angussmaske
- 40: Rotorherstellanlage
- 42: Auflageplatte
- 44: stiftförmiges Außen-Führungselement
- 46: stiftförmiges Innen-Führungselement
- 48: Auflagefläche
- 50: Ausrichteinrichtung
- 52: Feder (einer Nut-Feder-Verbindung)
- 54: Nut (der Nut-Feder-Verbindung)
- 56: Nut-Feder-Verbindung
- 58: Indexstift
- 60: Ausnehmung
- 62: Einstelleinrichtung
- 64: Blechpaket-Bereitstelleinrichtung
- 66: Aufnahmeeinrichtung
- 68: Magnet-Bereitstelleinrichtung
- 70: Magnet-Einführeinrichtung
- 72: Harz-Bereitstelleinrichtung
- 74: Trenn- und Aufbereitungseinrichtung
- 76: Rotorwellen-Bereitstelleinrichtung
- 78: Rotorwellen-Montageeinrichtung
- 80: Werkstückträger-Bereitstelleinrichtung
- 82: Transporteinheit
- 84: Steuerung
- 86: Anlagen-Komponenten-Schnittstelle
- 88: Transporteinheit-Schnittstelle
- 90: Codierung
- 92: Entlüftungskanal

## Patentansprüche

1. Blechpaket-Werkstückträger (24) zum Halten wenigstens eines mit einer Rotorwellenöffnung (20) versehenen Blechpakets (14) eines Rotorkerns (16) bei einer Harzversiegelung, bei dem Permanentmagnete (12) an oder in dem wenigstens einen Blechpaket (14) mittels eines Harzes versiegelt werden, wobei der Blechpaket-Werkstückträger (24) eine Aufnahmeplatte (42) und mehrere sich von der Aufnahmeplatte (42) erstreckende stiftförmige Führungselemente (44, 46) aufweist, die zum Positionieren des wenigstens einen Blechpakets (14) in einer radialen Richtung durch Angreifen an in Umfangsrichtung versetzten Stellen an dem Innendurchmesser und/oder dem Außendurchmesser des wenigstens einen Blechpakets (14) ausgebildet sind.

2. Blechpaket-Werkstückträger (24) nach Anspruch 1, **dadurch gekennzeichnet,**
**dass** die stiftförmigen Führungselemente (44, 46)
2.1 wenigstens drei stiftförmige Führungselemente (44, 46) umfassen,
2.2 als Außen-Führungselemente (44) zum Angreifen an in Umfangsrichtung versetzten Stellen an dem Außendurchmesser des wenigstens einen Blechpakets (14) ausgebildet sind und/oder
2.3 als Innen-Führungselemente (46) zum Angreifen an in Umfangsrichtung versetzten Stellen an dem Innendurchmesser des wenigstens einen Blechpakets (46) vorgesehen sind und/oder
2.4 gleichmäßig um ein Zentrum einer Auflagefläche (48) der Aufnahmeplatte (42) verteilt vorgesehen sind und/oder
2.5 eine konvexe, kreisförmige oder ovale Außenkontur für einen linienförmigen Kontakt mit dem Innendurchmesser oder dem Außendurchmesser des wenigstens einen Blechpakets (14) aufweisen.

3. Blechpaket-Werkstückträger (24) nach einem der voranstehenden Ansprüche,
**gekennzeichnet durch** eine Ausrichteinrichtung (50) zum Positionieren des wenigstens einen Blechpakets (14) in einer Umfangsrichtung **durch** formschlüssigen Eingriff mit dem wenigstens einen Blechpaket (14).

4. Blechpaket-Werkstückträger (24) nach Anspruch 3, **dadurch gekennzeichnet,**
**dass** die Ausrichteinrichtung (50) wenigstens ein Eingriffselement aus der Gruppe aufweist, die eine Feder (52) an einem der stiftförmigen Führungselemente (44, 46) zum Bilden einer Nut-Feder-Verbindung (56) durch Eingreifen in eine Nut (54) an dem wenigstens einen Blechpaket (14), eine Nut an einem der stiftförmigen Führungselemente (44, 46) zum Bilden einer Nut-Feder-Verbindung (56) zusammen mit einer Feder an dem wenigstens einen Blechpaket (14), eine Ausnehmung an der Aufnahmeplatte (42) zur Aufnahme eines an dem Blechpaket (14) vorgesehenen Indexstifts und einen Indexstift (58), der von der Aufnahmeplatte (42) zum Eingreifen in eine sich axial erstreckende Ausnehmung (60) an dem Blechpaket (14) vorsteht, umfasst.

5. Blechpaket-Werkstückträger (24) nach einem der voranstehenden Ansprüche, ausgebildet als
5.1 Werkstückträger zum Aufnehmen eines Blechpakets (14) für ein Single-Stack-Molding oder
5.2 Werkstückträger zum Aufnehmen mehrerer gestapelter Blechpakete (14) für ein Multi-Stack-Molding.

6. Blechpaket-Werkstückträger (24) nach einem der voranstehenden Ansprüche, **gekennzeichnet durch** eine Einstelleinrichtung (62) zum Einstellen der Position der Führungselemente (44, 46) zwecks Anpassung an unterschiedlich dimensionierte Blechpakete (14).

7. Blechpaket-Werkstückträger (24) nach Anspruch 6, **dadurch gekennzeichnet,**
**dass** die Einstelleinrichtung (62) wenigstens eine oder mehrere der folgenden Einheiten umfasst:
7.1 mehrere Befestigungseinheiten an der Aufnahmeplatte (42) zur wahlweisen Befestigung der stiftförmigen Führungselemente (44, 46) an vorbestimmten Positionen;
7.2 mehrere Befestigungslöcher in der Aufnahmeplatte (42) zum wahlweisen Einsetzen der stiftförmigen Führungselemente (44, 46);
7.3 ein zu einem Zentrum des jeweiligen Führungselements (44, 46) versetzter Befestigungsvorsprung zum Befestigen des Führungselements (44, 46) durch Einsetzen in eine Befestigungsöffnung in der Aufnahmeplatte (42).

8. Blechpaket-Werkstückträger (24) nach einem der voranstehenden Ansprüche, **gekennzeichnet durch** wenigstens eine oder mehrere der folgenden Einheiten:
8.1 eine Anlagen-Komponenten-Schnittstelle (86) an der Unterseite der Aufnahmeplatte (42) mit wenigstens einer Aufnahme zur positionsgenauen Übergabe des Blechpaket-Werkstückträgers (24) an Anlagen-Komponenten (66, 70, 10, 74, 80) einer Rotorherstellanlage (40);
8.2 eine Transporteinheit-Schnittstelle (88) an der Seite des Werkstückträgers (24) mit wenigstens einer Aufnahme zum positionsgenauen form- und/oder kraftschlüssigen Erfassen des Werkstückträgers (24) **durch** eine Transporteinheit (82) einer Rotorherstellanlage (40);
8.4 eine maschinenlesbare Codierung (90) zur Identifikation des Werkstückträgers (24) und/oder des darin aufzunehmenden Blechpaket-Werkstücks (14, 16);
8.5 wenigstens einen Entlüftungskanal (92) an der Oberseite der Auflageplatte (42) zur Entlüftung von Magnetaufnahmekavitäten (18) des wenigstens einen Blechpakets (14) bei der Harzversiegelung.

9. Blechpaket-Werkstückträger-Anordnung (22), umfassend einen Blechpaket-Werkstückträger (14) nach einem der voranstehenden Ansprüche und wenigstens ein darin zu haltendes Blechpaket (14) für einen Rotorkern (16), wobei das wenigstens eine Blechpaket (14) Magnetaufnahmekavitäten (18) zur Aufnahme von Permanentmagneten und eine Rotorwellenöffnung (20) zur Aufnahme einer Rotorwelle aufweist.

10. Verwendung eines Blechpaket-Werkstückträgers (24) nach einem der Ansprüche 1 bis 8 bei der Harzversiegelung, bei der Permanentmagnete (12) an oder in dem wenigstens einen durch den Blechpaket-Werkstückträger (24) gehaltenen Blechpaket mittels des Harzes versiegelt werden.

11. Harzversiegelungsvorrichtung (10) zum Harzversiegeln eines Rotorkerns (16), um Permanentmagnete (12) an oder in wenigstens einem Blechpaket (14) des Rotorkerns (16) mittels Harzes zu versiegeln, umfassend wenigstens einen Blechpaket-Werkstückträger (24) nach einem der Ansprüche 1 bis 8,
eine Presse (26), in der der Blechpaket-Werkstückträger (24) mit wenigstens einen darin gehaltenen Blechpaket (14) mit Permanentmagneten (12) aufnehmbar ist, und
eine Harzzuführeinrichtung (33) zum Zuführen und Einpressen des Harzes in Zwischenräume zwischen Presse (26), Blechpaket (14) und Permanentmagneten (12).

12. Rotorherstellanlage (40) zum Herstellen eines Rotors einer elektrischen Maschine, umfassend mehrere Anlagen-Komponenten (10, 64, 66, 68, 70, 72, 74, 76, 78, 80, 82, 84), von denen wenigstens eine eine Harzversiegelungsvorrichtung (10) nach Anspruch 11 ist.

13. Im Zuge einer Herstellung eines Rotors einer elektrischen Maschine durchzuführendes Harzversiegelungsverfahren zum Versiegeln von Permanentmagneten (12) in oder an wenigstens einem Blechpaket (14) eines Rotorkerns (16), umfassend:
a) Bereitstellen wenigstens eines Blechpaket-Werkstückträgers (24) nach einem der Ansprüche 1 bis 8,
b) Bereitstellen wenigstens eines Blechpakets (14);
c) Einsetzen des wenigstens einen Blechpakets (14) in den wenigstens einen Blechpaket-Werkstückträger (24);
d) Einsetzen von Permanentmagneten (12) in Magnetaufnahmekavitäten (18) des wenigstens einen Blechpakets (14);
e) Pressen des in dem Blechpaket-Werkstückträger (24) gehaltenen wenigstens einen Blechpakets (14) mittels einer Presse (26),
f) Zuführen von Harz, um die Permanentmagnete (12) in den Magnetkavitäten (18) zu versiegeln.

14. Harzversiegelungsverfahren nach Anspruch 13, **gekennzeichnet durch** wenigstens einen oder mehrere der Schritte:
f1) Zuführen von Harz direkt in das wenigstens eine Blechpaket (14) oder **durch** eine Wuchtscheibe in das wenigstens eine Blechpaket (14);
g) Identifizieren des Werkstückträgers (24) und/oder des darin gehaltenen Blechpaket-Werkstücks (14, 16) **durch** Auslesen einer maschinenlesbaren Codierung (90) an dem Werkstückträger (24) und automatisches Steuern des Harzversiegelungsverfahrens in Abhängigkeit von der Identifizierung;
h) Anpassen des Werkstückträgers (24) an das zu haltende Werkstück **durch** Verändern der Position der stiftförmigen Führungselemente (44, 46);
i) Durchführen eines Single-Stack-Moldings **durch** Halten von mit Permanentmagneten (12) versehenen Einzelblechpakten in dem Werkstückträger (24) und Durchführen der Schritte e) und f) an den Einzelblechpaketen und Zusammensetzen der versiegelten Einzelblechpakete zu einem Rotorkern (16);
j) Durchführen eines Multi-Stack-Moldings **durch** Stapeln mehrerer Einzelblechpakete zu einem in dem Blechpaket-Werkstückträger (24) gehaltenen und mit Permanentmagneten (24) versehenen Blechpaketstapel und Durchführen der Schritte e) und f) an dem Blechpaketstapel;
k) Verwenden einer Harzversiegelungsvorrichtung (10) nach Anspruch 11.

15. Computerprogramm umfassend Anweisungen, die eine Harzversiegelungsvorrichtung (10) nach Anspruch 11 dazu veranlassen, ein Harzversiegelungsverfahren nach einem der Ansprüche 13 oder 14 durchzuführen.
